(19) Europäisches Patentamt
European Patent Office
Office européen des brevets

(11) **EP 3 959 987 B1**

(12) **EUROPEAN PATENT SPECIFICATION**

(45) Date of publication and mention
of the grant of the patent:
**13.08.2025 Bulletin 2025/33**

(21) Application number: **21193318.9**

(22) Date of filing: **26.08.2021**

(51) International Patent Classification (IPC):
*A23D 7/005* (2006.01)    *A23P 30/40* (2016.01)
*A23L 29/219* (2016.01)    *A23L 9/20* (2016.01)
*A23L 9/10* (2016.01)    *A23G 9/46* (2006.01)
*A23C 13/12* (2006.01)    *A23C 11/00* (2025.01)
*A23G 9/52* (2006.01)    *A23P 10/47* (2016.01)

(52) Cooperative Patent Classification (CPC):
**A23L 9/20; A23D 7/0053; A23L 9/10; A23L 29/219;
A23P 10/47;** A23G 9/46; A23G 9/52; A23P 30/40

(54) **PROTEIN AND DAIRY FREE POWDER COMPOSITION FOR WHIPPED FOOD PRODUCTS**

PROTEIN- UND MILCHFREIE PULVERZUSAMMENSETZUNG FÜR AUFGESCHLAGENE LEBENSMITTELPRODUKTE

COMPOSITION DE POUDRE SANS PROTÉINES ET SANS PRODUITS LAITIERS POUR PRODUITS ALIMENTAIRES FOUETTÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2020 NL 2026353**

(43) Date of publication of application:
**02.03.2022 Bulletin 2022/09**

(73) Proprietor: **D.P. Supply B.V.
7905 TC Hoogeveen (NL)**

(72) Inventor: **HIEMSTRA, Martin
7905 TC Hoogeveen (NL)**

(74) Representative: **EP&C
P.O. Box 3241
2280 GE Rijswijk (NL)**

(56) References cited:
WO-A1-2008/045790    CN-A- 109 007 060
US-A- 3 702 254    US-A- 4 045 589
US-A1- 2006 040 034

## Description

The present invention relates to a powder composition for preparing protein-free whipped food products, and to a method of preparing the powder composition.

## Background Art

Fresh dairy cream can be whipped to provide decoration for desserts and other foods. However, because cream is relatively perishable and must be stored under refrigeration, many suitable substitutes have been developed over the years. These whipped cream substitutes are usually prepared from oil-in-water emulsions. Some are available as dried powders for convenience of storage and handling. Most contain protein or suffer severe penalties either during the drying or in the functionality of the whipped product.

Experience has shown that it is extremely difficult to obtain an emulsion which, if stable enough to be dried, will then be capable of being whipped to provide a whipped product having a high overrun combined with a substantial structural firmness. Typically, successful products of this type must contain proteinaceous emulsifiers to stabilize the emulsion. Proteins that are used are either animal based or vegetable based. Animal proteinaceous emulsifiers are commonly derived from cow's milk, such as serum proteins or casein. Most often casein salts / caseinates are used. Due to the strong lipophilic sections in such molecules, these are very suitable to stabilize the emulsion.

Over the last years, dairy-free products, meaning products containing no milk-based ingredients, are gaining popularity. This is mainly caused by the increasing awareness related to animal welfare and the impact of agriculture on the environment, which has led to a growing amount of individuals deciding to abstain from the use of animal products, such as dairy in their diet, e.g. vegans. However, motivation for dairy free diets may also be based on religion or born out of necessity due to intolerance or even allergy to dairy constituents. For instance, milk allergy is an adverse immune reaction to one or more proteins in cow's milk.

For the production of vegan / no dairy containing powder compositions for preparing whipped food products (such powder compositions are also known as whipping agents, whipping bases, or topping bases), vegetable proteins may be used to replace milk proteins. Vegetable proteinaceous emulsifiers used in products known in the market are based on pea proteins or soy proteins. It is known that other vegetable protein sources may also be used to produce powder compositions as well.

Vegetable products such as lupines, peas and soy also contain many proteins that can elicit allergic reactions. Because of this distinct allergenic potential, lupines as well as soy and products produced thereof are listed as allergens that are subject to labelling requirements.

Because of the abovementioned considerations, it would be advantageous to have a whipping base which does not contain protein.

In addition, people may have an intolerance to lactose, a common digestive problem where the body is unable to digest lactose, a type of sugar found in milk and dairy products. Therefore, it would further be advantageous to have a dairy-free product.

With the increased popularity of protein-free and/or dairy free products comes an increase in the demands that are put on these products. In general, customers require the protein-free and/or dairy-free alternatives to be as functional and appetizing as their dairy based counterparts. Not only should the alternatives have a similar appearance, they should also taste similar and have comparable sensory properties to their dairy based counterparts.

US 4045589 A for example discloses a protein-free coffee whitener. US 2006/040034 discloses a protein-free foaming composition. Both compositions are not whipping agents.

US 3702254 discloses a powdery mix containing a gelatin-pregelatinized starch setting system and an emulsified fat system. The mix can be whipped with boiling water. Due to the required presence of gelatin, the mix is not protein-free.

## Description of the invention

The present invention seeks to offer a protein-free and preferably a completely dairy-free powder composition (i.e. a protein-free powdered whipping agent) for preparing protein-free whipped food products with an overrun, firmness, stability, decorating properties and organoleptic properties such as mouthfeel which are at least comparable to that of dairy and/or protein based compositions.

Thereto, the powder composition for preparing protein-free whipped food products (i.e. the protein-free powdered whipping agent) according to the present invention, comprises the following food-approved components:

  (a) a vegetable lipid;
  (b) a modified starch;
  (c) a further carbohydrate;

(d) a low molecular weight emulsifier, and

(e) water, wherein the whipping agent comprises 5-30 wt% of the low molecular weight emulsifier.

The powder composition according to the present invention is primarily based on a lipid phase that by the addition of suitable non-proteinaceous emulsifiers (i.e. components (b) and (d) mentioned below) is structured in such a way that it becomes whippable.

Whipping encompasses the destabilization of the spray-dried emulsion by introducing shear. This may for example be done in a whipping bowl in a commercial mixer such as KitchenAid, Hobart, etc., or by using any standard hand mixer. In industrial applications, devices such as e.g. a Mondo mixer may be used. During whipping, air is included into the structure. This causes a significant increase in volume. Due to this volume increase, thin walls/lamellae are created in the structure, which reduces the firmness. The balance between the creation of a well-aerated product and sufficient structural firmness is considered a science based art.

The present inventors have found that problems that occur when leaving out protein from the compositions can be overcome by the powder composition according to the invention. These problems are: de-mixing of the emulsion, loss of drying ability of the emulsion (product will not dry within normal conditions), and significant loss of functionality (i.e. overrun, firmness, stability, decorating properties and organoleptic properties) of the powder composition. The latter is already the case when milk proteins are replaced by vegetable proteins.

More specifically, the inventors have found that instead of milk proteins and/or vegetable proteins, a modified starch may be used. By spray drying the composition of the present invention, (part of the) lipid phase (i.e. the combination of lipid and emulsifier) is fixated in a super cooled (alpha) crystal state. This enables the product to be whipped to generate a high overrun combined with a high firmness. In other words, a composition that is suitable for preparing whipped food products comprises lipid phase in an alpha state. A whipped food product is preferably defined as an aerated food product with an overrun of at least 150%. Up until now it has been the general consensus that protein is required to create a spray dried powder in which the lipid is in such a super cooled state that it renders a high performance whipping base.

Detailed description of the food-approved components

The expression food-approved refers to the approval provided by competent authorities within Europe and in other countries. The components of the powder composition must be edible and safe. If additional food additives are included in the powder composition or added to the powder composition, then the same requirement applies. The relative amounts of the components of the powder composition are expressed in percentages by weight (wt%) based on the weight of the powder composition, and together add up to 100 wt%. The expression "about" used in respect of the lower and upper limits of components within the composition provide for a variance of +/- 10% of the indicated values.

The vegetable lipid (a)

The vegetable lipid (a) may be solid or liquid. The definition therefore includes solid fats and vegetable oils. The vegetable lipid (a) may be an unhydrogenated, a partially hydrogenated or fully hydrogenated vegetable lipid. However, with regard to health effects, trans-fats are preferably avoided. The vegetable lipid (a) may furthermore be any otherwise modified lipid, such as inter-esterified lipid or fractionated lipid. The vegetable lipid (a), may also be a mixture of vegetable lipids.

Preferably, the vegetable lipid comprises a relatively large amount of Lauric (C12) and /or Myristic (C14) fatty acids in order to obtain good whippability. For example, the vegetable lipid may comprise from about 40 - 60 wt% C12 fatty acids and from about 10 - 25 wt% C14 fatty acids. C16 fatty acids are preferred for their structural properties. This results in particularly good whipping properties.

Suitable vegetable lipids include coconut oil, almond oil, cocoa butter, hazelnut oil, linseed oil, maize oil, olive oil, peanut oil, rapeseed oil, safflower oil, sunflower oil, high oleic sunflower oil, cottonseed oil, soybean oil, canola oil, palm oil, palm kernel oil, shea oil or any other similar vegetable oil which will not adversely affect the taste and/or performance of the product, as well as combinations and/or modifications (such as hydrogenation) thereof.

The vegetable lipid may be native, fractionated, hydrogenated and/or inter-esterified, and preferably is selected from lipid originated from coconut oil, palm kernel oil, shea oil, and combinations thereof. These lipids have a relatively high C12/C14 fatty acid content.

Preferably, the vegetable lipid has a melting point of about 10 - 50 °C.

The composition may include from about 25 - 60 wt% non-dairy lipid. The preferred range of lipid content is between about 35 - 60 wt%.

### The modified starch (b)

In the powder composition of the present invention, modified starch is used to stabilize the emulsion. Modified starches are used in food technology to vary the texture of many food products. The starches are modified by a number of methods, both physical and chemical, to tailor the properties of the required application.

A good and stable whippable product encompasses a good balance in the types of emulsifiers and the fatty acid composition thereof. The modified starch preferably has certain structure and surface active properties. In addition the starch preferably introduces certain viscosity to increase the resistance of an emulsion to separate. This aids to keep the emulsion stable during processing and drying, i.e. during preparation of the powder composition.

In the present invention, any modified starch (b) or mixtures thereof may be used, provided the modification increases the hydrophobicity of the native starch. Preferably, the molecular weight of the modified starch is 4.000 g/mol or higher, as determined by high performance size exclusion chromatography techniques. Preferably, the modified starch is a chemically modified starch, more preferably is a surface active starch, even more preferably is a succinylated starch, still more preferably an octenyl succinic anhydride (OSA) modified starch (starch sodium octenyl succinate).

The content of the modified starch may be between about 2 - 20 wt%, preferably between about 5 - 15 wt%. Surprisingly, the presence of the modified starch (c) in the powder composition results in the ability of the composition to form a powder composition for preparing aerated food products such as edible whipped food products with an overrun, firmness, stability, decorating properties and organoleptic properties that are similar to or even better than that of dairy and/or (vegetable) protein based compositions.

It is noted that the required amount of the modified starch depends on the degree in which the starch has been modified. With the products currently available on the market, the content as defined above is preferred. However, with a higher degree of functionalization, possibly less modified starch may be used, whereas on the other hand, when using a modified starch with a low degree of functionalization, higher amounts may be preferred. In such a case, the further carbohydrate (c) may even potentially be omitted, as the function of the further carbohydrate is then fulfilled by the unfunctionalized part of the modified starch.

### The further carbohydrate (c)

In order to facilitate spray drying a substantial part of the product preferably consists of a carbohydrate with a glass transition temperature sufficiently high to form a crystallized and/or glassy structure. The further carbohydrate (c), which is different from (b), and which may be water soluble, acts as a carrier for the other ingredients and also serves to reinforce the particle structure of the dried powder composition. Preferably, the further carbohydrate (c) is a vegetable carbohydrate or mixture of vegetable carbohydrates. These vegetable carbohydrates may be derived from, for instance, wheat, barley, corn, rice, beans, potato and similar crop, including plants having edible fruits, roots, stems and leaves. In this case the powder composition of the present invention is truly dairy-free. However, where allergy to proteins is the issue, and not lactose intolerance, lactose may be used instead of a vegetable carbohydrate or in admixture with one or more vegetable carbohydrates. For instance, 50 wt% or less of the carbohydrate (c) may be composed of lactose.

The further carbohydrate content may be between about 30 - 65 wt% of the composition, preferably between about 30 - 55 wt%, more preferably between about 30 - 45 wt%. Various water-soluble vegetable carbohydrates may be utilized, including but not limited to sucrose, dextrose, maltose, glucose syrup, corn syrup, maltodextrin, wheat syrup and mixtures of these.

Suitably, the further carbohydrate is a glucose syrup and/or maltodextrin, preferably a glucose syrup with a dextrose equivalent (a common measure of the amount of reducing sugars present in a sugar product, expressed as a percentage on a dry basis relative to dextrose: DE) of between 10 - 60, more preferably between 15 - 45, even more preferably between 25 - 40. Alternatively the further carbohydrate may be maltodextrin with a relatively high DE, preferably in the range of 15 - 20.

### The emulsifier (d)

Preferably, the emulsifier is a food grade low-molecular weight (LMW) surfactant or combination of such surfactants. LMW surfactants are common and approved additives in food applications. In Europe typically such surfactants have an E number in the range of E322-E499, and may carry a similar code in jurisdictions outside Europe. These surfactants usually have a molecular weight of less than 1500 g/mol, such as less than 800 g/mol, typically within the range of 200 - 600 g/mol. Preferably, the emulsifier has alpha tending properties. Thus, preferably, the emulsifier comprises an alpha tending LMW surfactant.

Suitable alpha tending surfactants include acetic acid ester of mono and diglycerides (ACETEM, E472a), lactic acid ester of mono and diglycerides (LACTEM, E472b), propane diol esters of fatty acids (PGME, E477), and sucrose esters (E473). Other surfactants such as E322, E471, E472c, E472e, E475, and E481 may also be used to introduce specific functionality.

Preferably the emulsifier is selected from the group consisting of acetic acid ester of mono and diglycerides (ACETEM, E472a), lactic acid ester of mono and diglycerides (LACTEM, E472b), propane diol esters of fatty acids (PGME, E477), sucrose esters (E473), mono- and diglycerides of fatty acids (E471), mono- and diacetyl tartaric acid esters of mono- and diglycerides of fatty acids (E472e), and combinations thereof.

The emulsifier is comprised in an amount of about 5 - 30 wt%. Below 5 wt%, a topping or other aerated food product (such as e.g. an aerated desert, ice cream, mousse, etc.) prepared from the powder composition is relatively unstable and lacks structure. Preferably, the emulsifier is comprised in an amount of at least 7 wt%, providing a stable topping. Above 30 wt% the functionality is not further improved or even may be adversely affected. For example, the processability and drying properties of the emulsion may deteriorate, and depending on the recipe the taste of the product may be adversely affected. Therefore, preferably the emulsifier is present in an amount of 30 wt% or less.

Water

Water is commonly present in the powder composition as a result of the spray drying process in an amount of about 0.1 - 7 wt%. Preferably, water is present in an amount of about 1.5 - 3 wt%. Lower amounts of water are difficult to realize, whereas higher amounts of water may decrease the stability of the powder composition.

Composition

A suitable composition of the powder composition of the present invention therefore comprises the following food-approved components, the total adding up to 100 wt%:

(a) from about 25 - 60 wt% of a vegetable lipid;
(b) from about 2 - 20 wt% of a modified starch;
(c) from about 30 - 65 wt% of a further carbohydrate;
(d) from about 5 - 30 wt% of a low molecular weight emulsifier, and
(e) from about 0.1 - 7 wt% of water.

Preparation of the emulsion

Emulsions for preparing the powder composition of the present invention are preferably prepared as follows. A water phase is prepared by adding the water-soluble components to water and allowing them to hydrate. The emulsifiers and lipid are preferably mixed to become a lipid phase at a temperature of between about 50 and 80 °C, more preferably between about 60 and 70 °C.

The water phase, which comprises the water and water-soluble components, and the lipid phase may then be combined. Preferably, the phases are combined under relatively high shear mixing, in order to form a uniform mixture comprising between 25 - 60 wt% of water, preferably between 25 - 35 wt% of water. This mixture is then preferably homogenized, for example in a in a high-pressure homogenizer, at a similar temperature as disclosed for mixing of the lipid phase in order to prepare the emulsion.

Spray drying

The powder composition of the present invention may be prepared by rapidly drying the emulsion such as by freeze drying or spray drying. The powder composition is preferably produced by spray drying. Spray drying is a common process for encapsulation of lipid substances. Many commonly known products such as encapsulated lipid powders; beverage creamers; milk powders/replacers; protein powders; are prepared by spray drying. The general objective is providing a durable product with a relatively high shelf life and stability. The general process for spray-drying "oil-in-water" emulsions involves preparation of the feed, atomization, droplet air contact, droplet drying and separation. Drying is done in a spray-dryer at controlled conditions.

The preparation of the feed may involve the use of a homogenizer, preferably a high shear and/or high-pressure homogenizer. An oil/water emulsion is typically heated to a temperature in the range of 50 to 95 °C, and pumped through a high-pressure homogenizer.

Typically a spray-dryer mixes heated air with the atomized (sprayed) emulsion within a drying chamber. The chamber may be in the form of a spray-drying tower, with adequate residence time and droplet trajectory distance for achieving the required heat and mass transfer to accomplish evaporation and produce a free flowing dry powder with a controlled average particle size. Various nozzles may be used to effect the atomization, including high-pressure nozzles or even dual fluid nozzles, that use additional compressed gas. The heated air may be introduced in co-current or counter-current flow. Furthermore, the bottom part of the drying chamber is typically designed such as to facilitate the separation of the hot air.

The temperature with which powders leave the drying chamber is a very important parameter, as it determines the product properties and the mechanical handling of the ensuing powder. Thus, spray-dried lipid powder has a matrix comprising carbohydrates with a glass transition temperature defined amongst others by the carbohydrates employed, and in that matrix a large amount of droplets comprising lipid, with a melting temperature defined amongst others by the lipid and other components contained therein (i.e. the lipid phase). Especially powders with a high lipid content are very prone to be mechanically damaged when the lipid phase is not sufficiently crystallized and thus remains (partly) liquid, i.e. in the alpha state. This makes the success of the product of the present invention even more remarkable.

The emulsions of the present invention are preferably spray dried at temperatures $T_{in}$ (temperature of the emulsion entering the drying chamber) of approx. 180 - 220 °C and $T_{out}$ (temperature with which powders leave the drying chamber) of about 70 - 100 °C.

Application

The spray dried powder composition of this invention may be used for preparation of different vegan and/or dairy free as well as non-vegan and/or dairy containing products. A basic vegan recipe consists of powder composition and water (and possible other additions). If it is not necessary that the recipe is vegan, one can whip the powder composition with milk (and possible other additions). The other additions may consist of hydrocolloids, phosphates, stabilizers, aromas, sugars, fruit, juice, spirits, chocolate, candy etc. Phosphates such as dipotassium phosphate (E340) may be used to alter the pH of the product. This may lead to different sensory properties and/or taste perception. Hydrocolloids are normally used to immobilize water in the whipped product, leading to difference in sensory properties and in some cases to improved stability. Some hydrocolloids which have surface-active properties may also aid the stabilization of the emulsion preparation and consequent drying of the present invention.

By application of the product of the present invention, it is possible to prepare different whipped/aerated food products, for example vegan mousse, aerated desserts, decorating cream, cake filling, (instant) ice cream and similar products.

The invention further relates to an instant edible powder comprising the powder composition according to the invention, further comprising any one or more further ingredients selected from acidity regulators, anti-caking agents, sugar, milk powder, hydrocolloids, stabilizers, coloring agents, flavoring agents, preservatives, flavor enhancers, and food supplements.

The invention further relates to a method for preparing an aerated food product, such as a whipped topping comprising whipping a powder composition according to the invention or the instant edible powder according to the invention in a food acceptable liquid to an overrun of 150-600%. The aerated food product is a preferably a dessert product, an (instant) ice cream, a mousse, crème Chantilly or an aerated filling, such as a cake filling.

**Example**

Preparation of powder compositions

Powder compositions according to the invention were prepared by adding the water-soluble components to water in a mixing tank and allowing them to hydrate. The emulsifiers and lipid were mixed to become a lipid phase at a temperature of about 65 °C. The water phase comprising the water and water-soluble components and the lipid phase were then combined under relatively high shear mixing in order to form a uniform mixture. This mixture was then homogenized, for example in a in a high-pressure homogenizer, at similar temperature. After homogenization, the obtained emulsion was spray dried at temperatures $T_{in}$ of approx. 180-220 °C and $T_{out}$ of about 70 -100 °C. After this, the powder compositions, also known as whipping powder or whipping agent, were obtained. The powders typically had a water content of about 1-4%.

Preparation of the whipped products

The whipped products were tested in a standard minimalistic application recipe, being 100 g of powder composition, 65 g of sugar, and 400 g of cold water (T = about 5 °C) (total of 565 g). Mixing was performed for 3 minutes in a Hobart N-50 mixer. Recipes are summarized in table 1 below.

Table 1.

| Recipe composition wt% product | | A. Standard dairy protein based | B. Standard vegetable protein based | C. Invention no dairy no protein |
|---|---|---|---|---|
| Lipid | Coconut oil | 35 | 35 | 35 |
| Carbohydrate | Glucose syrup | 40 | 40 | 40 |
| | Modified starch | 0 | 0 | 5 |
| Emulsifier | E472 b | 15 | 15 | 15 |
| | E471 | 1 | 1 | 1 |
| Milk protein | Sodium caseinate | 5 | 0 | 0 |
| Vegetable protein | Pea protein | 0 | 5 | 0 |
| Moisture | | 3 | 3 | 3 |

Measurements

*Overrun*

The amount of air that can be whipped in to the product can be expressed by reduction in specific weight (weight per volume). Commonly the extent to which an aerated product is increased in volume is expressed as the overrun. This is the percentage increase in volume, which is calculated by the following formula:

$$\text{Overrun \%} = C / (B-A) \times 100 - 100$$

wherein A = weight of a cup, B = weight of the cup with whipped product, C = volume of the cup.

*Initial firmness*

The firmness is a measure of the structural strength of the whipped product. This is created by the degree in which the lipid crystalizes during whipping and forms a sturdy lipid crystal structure. It is further indicative of the sensory properties such as mouthfeel of the product and taste perception.
The firmness is measured as the resistance the product gives to a probe pressing into the product and is measured with a Brookfield CT3 Texture analyser.

*Firmness in fridge overnight*

This is determined in the same way as the initial firmness, after the whipped product has been cooled in the fridge overnight (approx. 20-24 hours) at a temperature in the range of 3 - 8 °C.

*Stability after 48 hr in fridge*

Determined in the same way as the initial firmness, after the whipped product has been cooled in the fridge for approx. 48 hours at a temperature in the range of 3 - 8 °C.

*Decorating sharpness*

This is a test and evaluation performed by an experienced person after piping. The surface structure of a rosette as well as the sharpness of the formed edges are evaluated and are considered a good indication of the decorating quality of a product. A high decorating sharpness is difficult to obtain as firm products (which are desirable) mostly are relatively hard and brittle/coarse, thus resulting in a dented structure. It is part of the art to create a stable super cooled lipid in the spray dried product that, some time after whipping, renders good decorating properties. In alternative cases this has to be realized by adding additional additives / E-numbers in the final application recipe to realize the desired decorating properties.
Results of property determinations are presented in table 2 below.

Table 2.

| Product performance/ properties | | A. Standard dairy protein based | B. Standard vegetable protein based | C. Invention no dairy no protein |
|---|---|---|---|---|
| Overrun | % | 325 | 250 | 320 |
| Initial firmness | gr | 300 | 200 | 250 |
| Firmness at 7 °C Overnight | gr | 400 | 140 | 550 |
| Stability after 48 hr at 7 °C | | ++ | +/- | ++ |
| Decorating sharpness | | ++ | - | +++ |
| Taste | | + | - | + |

From the results, it is clear that the powder composition of the present invention is a dairy free and protein-free product that meets the properties of traditional milk protein based powder compositions and exceeds the properties of vegetable protein based (vegan) products currently known.

Thus, it has been demonstrated that contrary to the prevailing opinion, protein is not necessary to create a well performing powder composition.

**Claims**

1.  Protein-free powdered whipping agent, comprising the following food-approved components:

    (a) a vegetable lipid;
    (b) a modified starch;
    (c) a further carbohydrate;
    (d) a low molecular weight emulsifier, which is a surfactant with a molecular weight of less than 1500 g/mol, and
    (e) water,

    wherein the whipping agent comprises 5 - 30 wt% of the low molecular weight emulsifier.

2.  Whipping agent according to claim 1, wherein the vegetable lipid is selected from lipid originated from coconut oil, palm oil, palm kernel oil, shea oil, and combinations thereof, preferably from coconut oil, palm kernel oil, shea oil, and combinations thereof, and more preferably has a melting point of about 10 - 50 °C.

3.  Whipping agent according to claim 1 or 2, comprising from about 25 - 60 wt% of vegetable lipid.

4.  Whipping agent according to any one of the preceding claims, wherein the further carbohydrate is a vegetable carbohydrate, preferably a water soluble carbohydrate, more preferably is selected from sucrose, dextrose, maltose, glucose syrup, corn syrup, maltodextrin, wheat syrup and mixtures of these, even more preferably is selected from glucose syrup, maltodextrin and mixtures of these.

5.  Whipping agent according to any one of the preceding claims, comprising from about 30 - 65 wt% of further carbohydrate.

6.  Whipping agent according to any one of the preceding claims, wherein the modified starch has a higher hydrophobicity than native starch, preferably has a molecular weight greater than 4000 g/mol, more preferably is a chemically modified starch, more preferably is a succinylated starch, still more preferably is an octenyl succinic anhydride (OSA) modified starch.

7.  Whipping agent according to any one of the preceding claims, comprising from about 2 - 20 wt% of modified starch.

8.  Whipping agent according to any one of the preceding claims, wherein the emulsifier is a low molecular weight surfactant with a molecular weight less than 800 g/mol, most preferably is selected from the group consisting of acetic acid ester of mono and diglycerides (ACETEM, E472a), lactic acid ester of mono and diglycerides (LACTEM, E472b), propane diol esters of fatty acids (PGME, E477), sucrose esters (E473), mono- and diglycerides of fatty acids (E471), mono- and diacetyl tartaric acid esters of mono- and diglycerides of fatty acids (E472e), and combinations thereof.

9.   Method of preparing the whipping agent according to any one of the preceding claims, the method comprising:

a) mixing components (a)-(d) with water to form a mixture;
b) homogenizing said mixture, and
c) drying said mixture, preferably spray-drying.

**Patentansprüche**

1.   Proteinfreies pulverförmiges Aufschlagmittel, umfassend die folgenden für Lebensmittel zugelassenen Bestandteile:

(a) ein pflanzliches Lipid;
(b) eine modifizierte Stärke;
(c) ein weiteres Kohlenhydrat;
(d) einen Emulgator mit niedrigem Molekulargewicht, der ein Tensid mit einem Molekulargewicht von weniger als 1500 g/mol ist, und
(e) Wasser,

wobei das Aufschlagmittel 5-30 Gew.-% an dem Emulgator mit niedrigem Molekulargewicht umfasst.

2.   Aufschlagmittel nach Anspruch 1, wobei das pflanzliche Lipid ausgewählt ist aus Lipid, das aus Kokosöl, Palmöl, Palmkernöl, Sheaöl und Kombinationen davon stammt, vorzugsweise aus Kokosöl, Palmkernöl, Sheaöl und Kombinationen davon, und bevorzugter einen Schmelzpunkt von etwa 10 - 50 °C aufweist.

3.   Aufschlagmittel nach Anspruch 1 oder 2, umfassend von etwa 25 bis 60 Gew.-% an pflanzlichem Lipid.

4.   Aufschlagmittel nach einem der vorstehenden Ansprüche, wobei das weitere Kohlenhydrat ein pflanzliches Kohlenhydrat ist, vorzugsweise ein wasserlösliches Kohlenhydrat, bevorzugter ausgewählt aus Saccharose, Dextrose, Maltose, Glucosesirup, Maissirup, Maltodextrin, Weizensirup und Gemischen davon, noch bevorzugter ausgewählt aus Glucosesirup, Maltodextrin und Gemischen davon.

5.   Aufschlagmittel nach einem der vorstehenden Ansprüche, umfassend von etwa 30 bis 65 Gew.-% an weiterem Kohlenhydrat.

6.   Aufschlagmittel nach einem der vorstehenden Ansprüche, wobei die modifizierte Stärke eine höhere Hydrophobie als native Stärke aufweist, vorzugsweise ein Molekulargewicht von höher als 4000 g/mol aufweist, bevorzugter eine chemisch modifizierte Stärke ist, bevorzugter eine succinylierte Stärke ist, noch bevorzugter eine Octenylbernsteinsäureanhydrid(OSA)-modifizierte Stärke ist.

7.   Aufschlagmittel nach einem der vorstehenden Ansprüche, umfassend von etwa 2 bis 20 Gew.-% an modifizierter Stärke.

8.   Aufschlagmittel nach einem der vorstehenden Ansprüche, wobei der Emulgator ein Tensid mit niedrigem Molekulargewicht mit einem Molekulargewicht von weniger als 800 g/mol ist, höchst bevorzugt ausgewählt aus der Gruppe bestehend aus Essigsäureester von Mono- und Diglyceriden (ACETEM, E472a), Milchsäureester von Mono- und Diglyceriden (LACTEM, E472b), Propandiolestern von Fettsäuren (PGME, E477), Saccharoseestern (E473), Mono- und Diglyceriden von Fettsäuren (E471), Mono- und Diacetylweisäureestern von Mono- und Diglyceriden von Fettsäuren (E472e) und Kombinationen davon.

9.   Verfahren zur Herstellung des Aufschlagmittels nach einem der vorstehenden Ansprüche, wobei das Verfahren umfasst:

a) Mischen der Komponenten (a)-(d) mit Wasser, um ein Gemisch zu bilden;
b) Homogenisieren des Gemischs, und
c) Trocknen des Gemischs, vorzugsweise Sprühtrocknen.

**Revendications**

1. Agent fouettant en poudre exempt de protéines, comprenant les constituants suivants approuvés pour les denrées alimentaires :

   (a) un lipide végétal ;
   (b) un amidon modifié ;
   (c) un glucide supplémentaire ;
   (d) un émulsifiant de faible masse moléculaire, qui est un tensioactif ayant une masse moléculaire inférieure à 1500 g/mol, et
   (e) de l'eau,

   dans lequel l'agent fouettant comprend 5 à 30 % en poids de l'émulsifiant de faible masse moléculaire.

2. Agent fouettant selon la revendication 1, dans lequel le lipide végétal est choisi parmi les lipides provenant de l'huile de coco, de l'huile de palme, de l'huile de palmiste, de l'huile de karité et de leurs combinaisons, de préférence de l'huile de noix de coco, de l'huile de palmiste, de l'huile de karité et de leurs combinaisons, et plus préférentiellement présente un point de fusion d'environ 10 à 50 °C.

3. Agent fouettant selon la revendication 1 ou 2, comprenant d'environ 25 à 60 % en poids de lipide végétal.

4. Agent fouettant selon l'une quelconque des revendications précédentes, dans lequel le glucide supplémentaire est un glucide végétal, de préférence un glucide soluble dans l'eau, plus préférentiellement est choisi parmi le saccharose, le dextrose, le maltose, le sirop de glucose, le sirop de maïs, la maltodextrine, le sirop de blé et leurs mélanges, encore plus préférentiellement, est choisi parmi le sirop de glucose, la maltodextrine et leurs mélanges.

5. Agent fouettant selon l'une quelconque des revendications précédentes, comprenant environ 30 à 65 % en poids du glucide supplémentaire.

6. Agent fouettant selon l'une quelconque des revendications précédentes, dans lequel l'amidon modifié a une hydrophobicité plus élevée que l'amidon natif, de préférence a une masse moléculaire supérieure à 4000 g/mol, plus préférentiellement est un amidon modifié chimiquement, plus préférentiellement est un amidon succinylé, encore plus préférentiellement est un amidon modifié par l'anhydride octénylsuccinique (OSA).

7. Agent fouettant selon l'une quelconque des revendications précédentes, comprenant environ 2 à 20 % en poids d'amidon modifié.

8. Agent fouettant selon l'une quelconque des revendications précédentes, dans lequel l'émulsifiant est un tensioactif de faible masse moléculaire avec une masse moléculaire inférieure à 800 g/mol, le plus préférentiellement est choisi dans le groupe constitué par un ester d'acide acétique de mono- et de diglycérides (ACETEM, E472a), un ester d'acide lactique de mono- et de diglycérides (LACTEM, E472b), des esters de propanediol d'acides gras (PGME, E477), des esters de saccharose (E473), des mono- et diglycérides d'acides gras (E471), des esters d'acide mono- et diacétyltartrique de mono- et de diglycérides d'acides gras (E472e), et leurs combinaisons.

9. Procédé de préparation de l'agent fouettant selon l'une quelconque des revendications précédentes, le procédé comprenant les étapes consistant à :

   a) mélanger les constituants a) à d) avec de l'eau pour former un mélange ;
   b) homogénéiser ledit mélange, et
   c) sécher ledit mélange, de préférence par pulvérisation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4045589 A
- US 2006040034 A
- US 3702254 A